# EUROPEAN PATENT APPLICATION

(11) **EP 4 722 841 A1**
(43) Date of publication of application: **08.04.2026**
(21) Application number: 23939273.1
(22) Date of filing: 06.11.2023
(51) Int. Cl.: G05D 1/43

(54) **ROBOT CONTROL METHOD AND APPARATUS, AND ELECTRONIC DEVICE AND STORAGE MEDIUM**

(30) Priority: 02.06.2023 CN 202310651505
(71) Applicant: Zhejiang Sunseeker Industrial Co., Ltd., Jinhua, Zhejiang 321000 (CN)
(72) Inventor: ZHANG, Zhiwen, Jinhua, Zhejiang 321000 (CN); LIU, Jihan, Jinhua, Zhejiang 321000 (CN)
(74) Representative: Manna, Sara
(86) International application number: PCT/CN2023/130028
(87) International publication number: WO 2024/244302

(57) **Abstract**

The present embodiment discloses a robot control method, electronic device and storage medium. The method comprises: obtaining information of an obstacle, location information of a target point, and control basic information of the robot; Simulating rotation based on the information of the obstacle information and the rotation dimension of the robot, judging whether the robot will collide with the obstacle during the rotation process; If it will collide with the obstacle, planning the arc path based on the location information of the target point and the control basic information, and obtaining the target path and a transition point on the target path; Controlling the robot to move towards the transition point according to the target path, and move towards the target point direction from the transition point. Based on this, this application combines simulation rotation with arc path planning to maximize the avoidance of robot collisions with obstacles, making obstacle avoidance more accurate, avoiding collision damage, and improving the work efficiency of the robot.

## Description

This application claims priority to Chinese Patent Application "Robot Control Method, Apparatus, Electronic Device and Storage Medium", No. CN202310651505.3, filed onJune 2, 2023, which is hereby incorporated by reference herein as if set forth in its entirety.

### Technical Field

The present disclosure generally relates to the field of robot control technology, and particularly to robot control method, apparatus, electronic device and storage medium.

### Background Technology

With the development of technology, more and more tasks can be completed by robots, such as the most common sweeping robots, lawn mowing robots, etc. Usually, the shape of the sweeping robot is circular. When it is detected as trapped during a bow-shape (Chinese character " 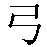 ") transition, it is controlled to rotate left or right. When the rotation angle exceeds the preset angle, the sweeping robot is controlled to move backward and rotate in the opposite direction to determine whether the sweeping robot has successfully escaped; Or directly rotate the corresponding angle to re-plan the path to escape from the trap. Lawn mowing robots are usually square in shape. When it is relatively close to the obstacle during a bow-shape (Chinese character " 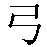 ") transition, if the circular robot is used to escape, it is likely to collide with the obstacle due to its shape, which may cause damage to the object or the robot, and also reduce the work efficiency of the robot.

### Summary of the Invention

The purpose of this disclosure is to provide an improved robot control method, apparatus, electronic device, and storage medium that solves at least one of the above-mentioned problems.

According to one aspect disclosed herein, the purpose is at least partially achieved through a robot control method, the robot control method includes:
Obtaining information of an obstacle, location information of a target point, and control basic information of the robot;
Simulating rotation based on the information of the obstacle and a rotation dimension of the robot, judging whether the robot will collide with the obstacle during the rotation process;
If there is a collision with the obstacle, planning an arc path based on the location information of the target point and the control basic information, to obtain a target path and a transition point on the target path;
Controlling the robot to move towards the transition point according to the target path, and move towards a direction of the target point from the transition point.

Therefore, the robot control method with the above features: obtaining the information of the obstacle, location information of the target point, and control basic information of the robot; Simulating rotation based on the information of the obstacle and the rotation dimension of the robot, judging whether the robot will collide with the obstacle during the rotation process; If there is a collision with the obstacle, planning the arc path based on the location information of the target point and the control basic information, to obtain the target path and the transition point on the target path; Controlling the robot to move towards the transition point according to the target path, and move towards the target point direction from the transition point, based on which, by combining simulation rotation with arc path planning, the situation of robots colliding with obstacles is avoided to the greatest extent, making obstacle avoidance more accurate, avoiding collision damage, and improving the efficiency of robots.

According to a second aspect disclosed herein, the purpose is at least partially achieved through a robot control apparatus. The apparatus includes:
Obtaining module, used to obtaining information of an obstacle, location information of a target point, and control basic information of the robot;
Collision predicting module, used to simulate rotation based on the information of the obstacle and the rotation dimension of the robot, to judge whether the robot will collide with the obstacle during the rotation process;
Arc planning module, used to plan the arc path based on the location information of the target point and the control basic information in case of collision with the obstacle, to obtain the target path and the transition point on the target path;
Travel controlling module, used to control the robot to move to the transition point according to the target path, and move from the transition point to the direction of the target point.

According to a third aspect of this disclosure, the purpose is at least partially obtained through an electronic device. This electronic device includes:
One or more processors;
A storage device for storing one or more programs,
When the one or more programs are executed by the one or more processors, such that the one or more processors implement the robot control method as provided in any embodiment of the present application.

According to a fourth aspect of this disclosure, the purpose is at least partially obtained through a computer-readable storage medium. A computer program is stored on the computer-readable storage medium, and when the program is executed by the processor, the robot control method provided in any embodiment of the present application is implemented.

Details of at least one embodiment will be described in the following drawings and descriptions. Other features, objectives, and advantages will be evident from the description, schema, and claims.

### Brief Description of the Drawings

Figure 1 is a schematic flowchart of the robot control method provided in Embodiment 1 of the present application;
Figure 2 is a schematic flowchart of the arc path planning provided in Embodiment 1 of the present application;
Figure 3 is a schematic block diagram of a robot control apparatus provided in Embodiment 2 of the present application;
Figure 4 is a schematic block diagram of an electronic device provided in Embodiment 3 of the present application.

### Detailed Description of the Drawings

The following will provide a further detailed explanation of the present application with reference to the accompanying drawings and embodiments. It can be understood that the specific embodiments described here are only intended to explain the present application and not to limit it. Furthermore, it should be noted that in order to facilitate the description, the drawings only show partial structures related to the present application, not the entire structure.

### Embodiment 1

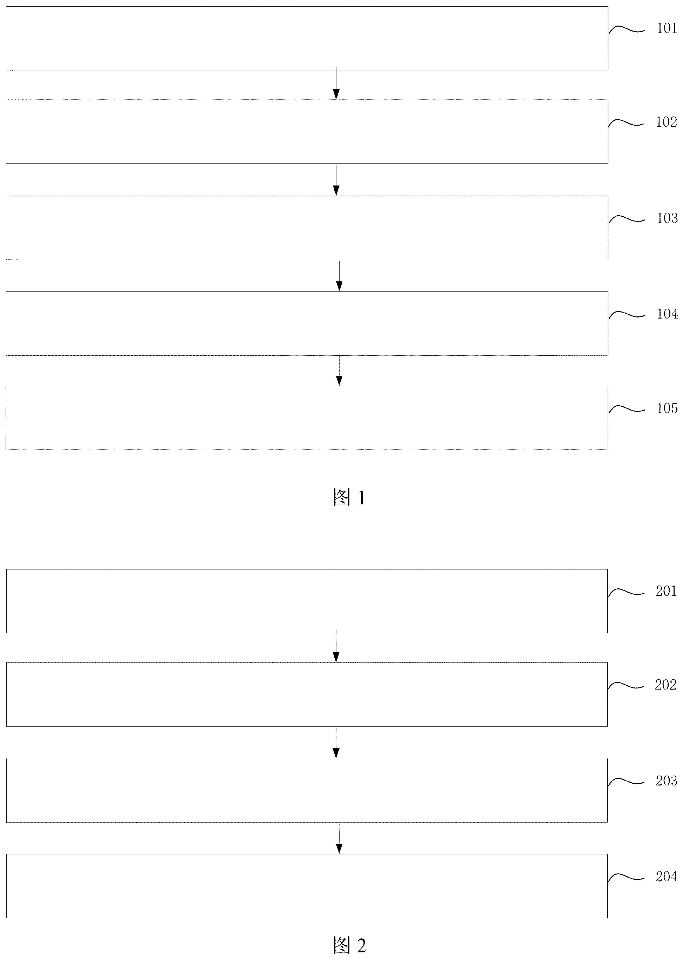

Figure 1 is a schematic flowchart of the robot control method provided in Embodiment 1 of the present application, and the method in this embodiment can be applied to the robot control application. This method can be executed by the robot control apparatus, which can be implemented in the form of hardware and/or in the form of software, and can generally be integrated into systems such as computers with data processing capabilities, specifically, the method includes the following steps:
Step 101: Obtaining information of an obstacle, location information of a target point, and control basic information of the robot.

In this step, the information of the obstacle can be point cloud information of obstacles, which can be usually obtained using devices such as Laser Radar. Laser Radar scans the environment within the corresponding range to obtain point cloud information of the environment. After analyzing the point cloud information of the environment, the point cloud information corresponding to any obstacle in the environment can be obtained, which is the information of the obstacle in this step.

It should be noted that the corresponding range of Laser Radar refers to the range that the Laser Radar device can scan. In addition, the quantity of obstacles present in the afore-mentioned environment can be one, or two or more. Therefore, the information of the obstacle obtained in this step can include point cloud information of one or more obstacles.

In addition, the target point refers to the next point that the robot is required to arrive. In a common example, during the control process of robot movement, the location information of the next required arrival point will be continuously generated. Each time it is generated, the location information of the required arrival point can be determined as the location information of the target point in this step.

Of course, in other embodiments, the robot will first plan multiple points and the order in which the robot passes through each point after performing a map scan of the overall environment. According to the order, after the robot arrives any point, the next point is the target point in this step.

Therefore, the location information of the target point obtained in this step can be obtained based on different control logics of the robot. In summary, the target point is the next location point that the robot is required to arrive.

Furthermore, the control basic information of a robot mainly refers to the information of the robot itself required to control its movement, such as the velocity range, minimum turning radius, preset minimum arc distance, preset farthest arc distance, rotation angle range, etc. of the robot.

It should be noted that in different examples, the content included in the control basic information can be different, as will be shown in subsequent explanations.

Wherein, the velocity range of the robot can be, but is not limited to, [0.1,0.2], and its velocity unit is m/s. Of course, the velocity range can be adjusted according to actual requirements.

The minimum turning radius is the sum of the distance from the robot's central axis to the tail and the preset safe distance, where the preset safe distance can be, but is not limited to, 0.1 meters.

The preset minimum arc distance refers to the minimum arc distance that the robot can escape from the trap, which can usually be set by the designer. This value is an assumed value, which is pre-assumed that the minimum arc distance to make the robot escape from the trap. In a specific example, the value can be set to twice the length of the robot body. In addition, the arc distance refers to the length distance of the arc.

The preset farthest arc distance is also an assumed value, which can be preset by designers according to requirements.

The rotation angle range refers to the maximum angle range that the robot can rotate without colliding with obstacles.

It should be noted that when the control basic information includes the rotation angle range, the rotation angle range of the robot without colliding with obstacles can be determined based on the information of the obstacle when obtaining the control basic information.

Among them, determining the rotation angle range of the robot without colliding with obstacles can be determined by simulating rotation based on the obstacle information and the rotation size of the robot. The rotation angle range can be used to indicate the range of the planned circular arc path during subsequent path planning.

Additionally, the robot referred to in this embodiment can be, but is not limited to, a square robot.

Step 102: Simulating rotation based on the information of the obstacle and a rotation dimension of the robot, judging whether the robot will collide with the obstacle during the rotation process.

In this step, the rotation dimension of the robot can also be the distance between the rotation center of the robot and the point where the robot body is farthest from the rotation center. For greater safety, a safety distance can be added to the distance.

In addition, the point cloud information of the information of the obstacle can be three-dimensional coordinate information of obstacle edge points, which is based on the Laser Radar of the robot as the coordinate origin. Specifically, the process of simulating rotation can be as follows: first, calculate the distance between each target edge point of the obstacle and the rotation center of the robot, wherein the target edge point is the edge point of the obstacle that has the same height or a preset height difference from the rotation center of the robot, and then, compare the obtained distance with the above-mentioned rotation dimension.

If there is a distance smaller than the rotation dimension, it indicates that the robot will collide with obstacles during the process of the simulating rotation. If there is no distance smaller than the rotation dimension, it indicates that the robot will not collide with obstacles during the process of the simulating rotation.

It should be noted that, during the process of the simulating rotation mentioned above, the calculation of the distance between two coordinate points is mainly involved. The specific calculation formula can refer to relevant techniques and will not be repeated here.

Step 103: If the robot does not collide with obstacles during the rotation process, rotating the robot to the target direction corresponding to the location information of the target point; controlling the robot to move in the target direction to the target point.

In this step, if it is judged in step 102 that the robot will not collide with obstacles during the rotation process, the robot can be controlled to rotate to the target direction, which can be straight line direction from the current location of the robot to the target point.

Then the robot is controlled to move in the target direction to the target point. It should be noted that before controlling the robot to move in the target direction, it can be first judged if there are any obstacles that can obstruct the robot's movement in the direction.

Specifically, the vertical distance between the obstacles around the travel path and the travel path can be calculated to judge if there is a vertical distance smaller than the preset distance, wherein the preset distance here can be the vertical distance from the center point of the robot to the side of the robot.

If it does not exist, it indicates that there are no obstacles that can block the robot's movement. At this point, the robot can be controlled to move in the target direction to the target point; If it exists, it indicates that there are obstacles that can block the robot's movement, and the path planning needs to be performed again.

It should be noted that if the path planning needs to be performed again at this time, steps 104 and 105 can be executed to plan the obstacle avoidance path.

Step 104: If there is a collision with obstacles, planning the arc path based on the location information of the target point and the control basic information, to obtain an arc path and a transition point on the arc path.

In this step, the process of performing arc path planning can refer to Figure 2, which is a schematic flowchart of the arc path planning provided in Example 1 of the present application.

As shown in Figure 2, the process of performing arc path planning may include:
Step 201: Planning the forward arc path based on the location information of the target point and the control basic information. For each planned forward arc path, judging whether the forward arc path meets the preset requirements.

In this step, when planning the forward arc path based on the location information of the target point and the control basic information, multiple forward arc paths can be planned in sequence.

Specifically, the control basic information here may include a velocity range and minimum turning radius of the robot. Firstly, extract a first preset quantity of velocity values from the velocity range, and determine the corresponding angular velocity of each velocity value based on the minimum turning radius.

In a specific example, the velocity range can be [0.1,0.2], and the first preset quantity can be *i*, for example, if*i*=5, five velocity values can be uniformly extracted from the velocity range, such as 0.11, 0.13, 0.15, 0.17, and 0.19.

Then, the angular velocity corresponding to each velocity value is calculated according to the preset formula, wherein the preset formula can be *ω* = *v*/*R*₀, where *ω* represents the angular velocity, *v*represents the velocity value, and *R*₀ represents the minimum turning radius.

Then, the obtained velocity value and the angular velocity are combined in pairs. Specifically, obtain a set of velocity values *v* = (*v*₀*, v*₁*, v*₂, ··· , *vᵢ*), and a set of angular velocity*ω* = (*ω*₀, *ω*₁, *ω*₂, *··· , ωⱼ*).Take one element each from the set of velocity values and the set of the angular velocity to form a combination (*vᵢ, ωⱼ*), where *i* ∈ *N* and *j* ∈ *N.* For any combination, the arc radius of the forward arc path corresponding to the combination is determined. If the arc radius meets the requirements of the preset radius, the arc radius is determined as the arc radius to be taken;
For any of the arc radius to be taken, if there are other arc radius to be taken with the same value, the combination corresponding to any arc radius to be taken of the arc radius to be taken with the same value is determined as a target combination; If there are no other arc radius to be taken with the same value, the combination corresponding to the arc radius to be taken is determined as a target combination.

For any target combination, a forward arc path is fitted based on the velocity values and the angular velocity values in the target combination.

In a specific example, assuming the minimum turning radius is 0.5 meters, taking velocity values of 0.1m/s, 0.15m/s, 0.2m/s, the angular velocities are obtained as 0.2r/s, 0.3r/s, 0.4r/s, and the following combinations (*v*, *ω*) are obtained:
(0.1,0.2), (0.1,0.3), (0.1,0.4), (0.15,0.2), (0.15,0.3), (0.15,0.4), (0.2,0.2), (0.2,0.3), (0.2,0.4).

For any combination, the radius of the arc is determined according to the formula R = *v*/*ω*, which are: 0.5, 0.33, 0.25, 0.75, 0.5, 0.375, 1, 0.67, 0.5. The preset radius requirement is that the arc radius is greater than or equal to the minimum turning radius. The obtained arc radius to be taken and the corresponding target combination are shown in Table 1:

**Table 1**

| arc radius | velocity value | angular velocity |
|---|---|---|
| 0.5 | 0.1 | 0.2 |
| 0.5 | 0.15 | 0.3 |
| 0.5 | 0.2 | 0.4 |
| 0.75 | 0.15 | 0.2 |
| 0.67 | 0.2 | 0.3 |
| 1 | 0.2 | 0.2 |

For each planned forward arc path, a second preset quantity of simulation points are extracted from the forward arc path, and the rotation is sequentially simulated on the simulation points. In a specific example, the second preset quantity can be 100.

It should be noted that when selecting simulation points, the points can be selected according to a fixed step size. At this time, the second preset quantity needs to be calculated based on the length of the forward arc path and the fixed step size, which can be rounded down to the quotient value of the length of the forward arc path and the fixed step size.

Of course, the second preset quantity can also be fixed directly, and then the quotient of the length of the forward arc path and the second preset quantity is calculated. The quotient can be determined as the distance between the simulation points to select the points.

In addition, the process of simulating rotation at the simulation point can refer to the simulating rotation process in the above-mentioned step 102, which will not be repeated here.

If the robot will not collide with obstacles when performing the simulating rotation at a simulation point, , the simulation point currently undergoing simulating rotation meets the preset requirements, and the forward arc path meets the preset requirements; If the robot will collide with obstacles when performing simulating rotation at all simulation points, the forward arc path is determined not to meet the preset requirements.

It should be noted that whether or not there will be a collision with an obstacle can also refer to the judgment process in the above-mentioned step 102, which will not be repeated here.

Additionally, the above process can demonstrate that the preset requirement for the forward arc path referred to in this step is that there is a simulation point that will not collide with obstacles.

Step 202: If satisfied, determining the currently planned forward arc path as the target path, and determining the points on the target path that meet the preset requirements as transition points. If not satisfied, planning a next forward arc path.

In this step, if a forward arc path that meets the preset requirements appears in the previous step, it can be determined as the target path, and the simulation points on the target path that meet the preset requirements can be determined as transition points. The simulation points that meet the preset requirements are those will not collide with obstacles when the simulating rotation is performed.

If it does not meet the requirements, the next set of velocity values, corresponding angular velocities, and the location information of the target point is taken to plan the next forward arc path.

Step 203: If all the planned forward arc paths do not meet the preset requirements, judging whether the historical path to the current location point meets the preset requirements based on the control basic information.

Of course, it is also possible that all the planned forward arc paths do not meet the preset requirements, and in this case, searching for transition points from the historical path can be performed. That is to say, selecting points is performed from the historical path to the current location point, and then simulating rotation is performed. The preset requirement here is still that there is a simulation point without colliding with obstacles.

Step 204:If satisfied, determining the historical path as the target path, and determining the points on the target path that meet the preset requirements as transition points.

Similarly, the points that meet the preset requirements in this step are the simulation points without colliding with obstacles in the historical path when the simulating rotation is performed.

It should be noted that if the historical path does not meet the preset requirements, an alarm can be triggered and a manual intervention in path planning is required.

In order to further simplify the process of selecting points in this application, the control basic information may also include a preset minimum arc distance, wherein the preset minimum arc distance is the assumed minimum arc distance that the robot can escape from the trap.

Then, before extracting the simulation points, it is judged whether the distance of the planned forward arc path is less than the preset minimum arc distance. If the distance of the forward arc path is less than the preset minimum arc distance, the forward arc path is filtered and the next forward arc path is planned.

Based on this feature, it is possible to filter out some forward arc paths that may not meet the preset conditions, reducing the computational cost of planning.

Of course, the actual length of selecting points in the forward arc path can also be shortened, so as to further reduce the computational cost.

For example, the control basic information includes a preset farthest arc distance. When extracting simulation points, if the distance of the forward arc path is greater than the preset farthest arc distance, the second preset quantity of the simulation points are extracted from the forward arc path, wherein the distance from each simulation point to the starting point is less than or equal to the preset farthest arc distance;

If the distance of the forward arc path is less than or equal to the preset farthest arc distance, the second preset quantity of the simulation points is extracted from the forward arc path.

That is to say, if the distance of the forward arc path is greater than the preset farthest arc distance, the simulation points can be extracted from the part of the forward arc path that is less than the preset farthest arc distance.

For example, the control basic information includes a preset minimum arc distance and farthest arc distance. When extracting simulation points, if the distance of the forward arc path is greater than the preset farthest arc distance, the second preset quantity of the simulation points are extracted from the forward arc path, wherein the distance from each simulation point to the starting point is less than or equal to the preset farthest arc distance, and the distance from each simulation point to the starting point is greater than or equal to the preset minimum arc distance.

If the distance of the forward arc path is less than or equal to the preset farthest arc distance, the second preset quantity of the simulation points are extracted from the forward arc path, and the distance from each simulation point to the starting point is greater than or equal to the preset minimum arc distance.

That is to say, if the distance of the forward arc path is greater than the preset farthest arc distance, the selected range of points is the part of the forward arc path that is greater than the preset minimum arc distance and less than the preset farthest arc distance.

If the distance of the forward arc path is less than or equal to the preset farthest arc distance, the selected range of points is the part of the forward arc path that is greater than the preset minimum arc distance.

Step 105: Controlling the robot to move towards the transition point according to the arc path and move towards the target point from the transition point.

In this step, the robot can be controlled to move to the transition point according to the arc path obtained above, rotate to the direction of the target point at the transition point, and then continue to move to the target point.

In this embodiment, obtaining information of an obstacle, location information of the target point, and control basic information of the robot; simulating rotation based on the information of the obstacle and robot rotation dimension to judge whether the robot will collide with obstacles during the rotation process; If it collides with the obstacle, planning the arc path based on the location information of the target point and the control basic information, and obtaining the transition points on the arc path and the arc path; controlling the robot to move towards the transition point according to the arc path, and moving towards the target point direction from the transition point. Based on which, this application combines simulating rotation with arc path planning to maximize the avoidance of robot collisions with obstacles, making obstacle avoidance more precise, avoiding collision damage, and improving the work efficiency of robot.

### Embodiment 2

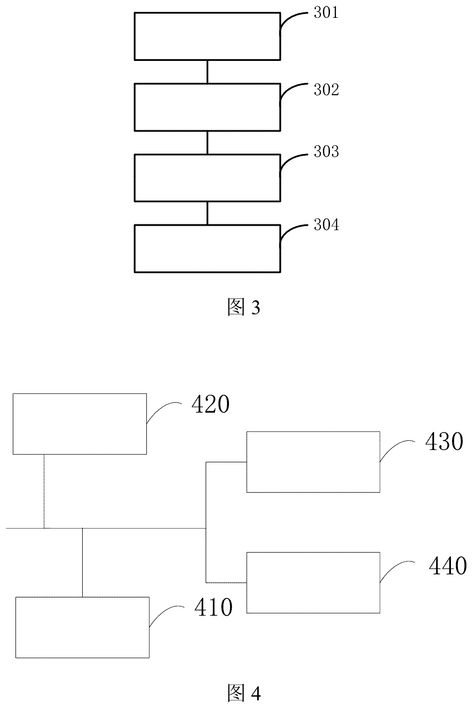

Figure 3 is a schematic block diagram of a robot control apparatus provided in embodiment 2 of the present application. The robot control apparatus provided in the present embodiment can execute the robot control method provided in any present embodiment, and has functional modules and beneficial effects corresponding to the executing method. The apparatus can be implemented in the form of software and/or in the form of hardware, as shown in Figure 3, the robot control apparatus specifically includes: an obtaining module 301, a collision prediction module 302, an arc planning module 303, and a travel control module 304.
Wherein, the obtaining module is used to obtain information of an obstacle, location information of a target point, and control basic information of the robot;
The collision prediction module is used to simulate rotation based on the information of the obstacle and robot rotation dimension, and judge whether the robot will collide with obstacles during the rotation process;
The arc planning module is used to plan an arc path based on the location information of the target point and control basic information in case of collision with obstacles, to obtain the arc path and transition points on the arc path;
The travel control module is used to control the robot to move towards a transition point according to the arc path and move towards the target point direction from the transition point.

Furthermore, the travel control module comprises:
A rotation control module, used to rotate the robot to the target direction corresponding to the location information of the target point, if the robot does not collide with obstacles during the rotation process;
A travel module, used to control the robot to move in the target direction to the target point.

Furthermore, the arc planning module includes:
A path planning unit, used to plan a forward arc path based on the location information of the target point and control basic information, for each planned forward arc path, judging whether the forward arc path meets the preset requirements;
A first transition point determination unit, if satisfied, used to determine the current planned forward arc path as the target path, and determine the points on the target path that meet the preset requirements as transition points, if not satisfied, used to plan a next forward arc path;
A historical path judgment unit, used to judge whether the historical path to the current location point meets the preset requirements based on the control basic information, if all the planned forward arc paths do not meet the preset requirements;
A second transition point determination unit, if satisfied, used to determine the historical path as a target path, and to determine the points on the target path that meet the preset requirements as transition points.

Furthermore, the control basic information includes a velocity range and minimum turning radius of the robot;
The path planning unit includes:
An angular velocity determination sub-unit, used to extract a first preset quantity of velocity values from the velocity range, and determine angular velocities corresponding to each velocity value based on the minimum turning radius;
A path generation sub-unit, used to generate a forward arc path to arrive the target point for any velocity value based on the velocity value, corresponding angular velocity, and location information of the target point;
A simulating rotation sub-unit, used to extract a second preset quantity of simulation points from the forward arc path, and sequentially simulate rotation on the simulation points;
A first judgment sub-unit, used to determine that if the simulating rotation is performed at a simulation point, the robot will not collide with obstacles, the forward arc path meets the preset requirements, and the simulation point currently undergoing simulating rotation meets the preset requirements;
A second judgment sub-unit, used to determine if the robot collides with obstacles during simulating rotation at all simulation points, the forward arc path does not meet the preset requirements.

Furthermore, the control basic information also includes a preset minimum arc distance;
The arc planning module also includes:
An arc path filtering module, used to filter the forward arc path and plan the next forward arc path if the distance of the forward arc path is less than the preset minimum arc distance.

Furthermore, the control basic information also includes a preset farthest arc distance;
the simulating rotation sub-units includes:
A first extraction sub-unit, used to extract the second preset quantity of simulation points from the forward arc path if the distance from the forward arc path is greater than the preset farthest arc distance, wherein the distance from each simulation point to the starting point is less than or equal to the preset farthest arc distance;
A second extraction sub-unit, used to extract the second preset quantity of simulation points from the forward arc path if the distance is less than or equal to the preset farthest arc distance.

Furthermore, the control basic information also includes a preset farthest arc distance;
the simulating rotation sub-unit may include:
A third extraction sub-unit, used to extract the second preset quantity of simulation points from the forward arc path if the distance from the forward arc path is greater than the preset farthest arc distance, wherein the distance from each simulation point to the starting point is less than or equal to the preset farthest arc distance, and the distance from each simulation point to the starting point is greater than or equal to the preset minimum arc distance.

A fourth extraction sub-unit, used to extract the second preset quantity of simulation points from the forward arc path if the distance from the path is less than or equal to the preset farthest arc distance. Each simulation point has a distance from the starting point greater than or equal to the preset minimum arc distance.

Furthermore, the control basic information includes a range of rotation angles;
The obtaining module includes:
A rotation angle range determination unit, used to determine a rotation angle range of the robot without colliding with obstacles based on the information of the obstacle.

### Embodiment 3

Figure 4 is a schematic block diagram of an electronic device provided in Embodiment 3 of the present application, as shown in Figure 4. The electronic device comprises a processor 410, a memory 420, an input apparatus 430, and an output apparatus 440; The number of a processor410 in electronic devices can be one or more, taking one processor 410 as an example in Figure 4; The processor 410, memory 420, input apparatus 430, and output apparatus 440 in electronic devices can be connected through a bus or other means, as shown in Figure 4, using bus connection as an example.

The memory 420, as a computer-readable storage medium, can be used to store software programs, computer executable programs, and modules, such as program instructions/modules corresponding to the robot control method in the embodiments of the present invention. The processor 410 executes various functional applications and data processing of electronic devices by running software programs, instructions, and modules stored in memory 420, thus achieving the robot control method as described above:
Obtaining information of an obstacle, location information of target points, and control basic information of the robot;
Simulating rotation based on the information of the obstacle and the robot's rotation dimension, judging whether the robot will collide with an obstacle during the rotation process;
If there is a collision with an obstacle, planning the arc path based on the location information of the target point and the control basic information, to obtain a transition point and an arc path on the transition point;
Controlling the robot to move towards the transition point according to the arc path and move towards the target point from the transition point.

The memory 420 may mainly include a storage program area and a storage data area, wherein the storage program area may store application programs required by operating an electronic device or at least one function; The storage data area can store data created based on the terminal usage, etc. In addition, the memory 420 may include a high-velocity random-access memory and may also include a non-volatile memory, such as at least one disk storage device, flash memory device, or other non-volatile solid-state storage device. In some examples, the memory 420 may further include a memory remotely set relative to the processor 410, which can be connected to electronic devices through a network. Examples of the above networks include but are not limited to internet, intranet, LAN, mobile communication network and their combinations.

### Embodiment 4

Embodiment 4 of the present application also provides a storage medium containing computer executable instructions, which are used to execute a robot control method when executed by a computer processor. The method comprises:
Obtaining information of an obstacle, location information of target points, and control basic information of the robots;
Simulating rotation based on the information of the obstacle and robot rotation dimension, judging whether the robot will collide with obstacles during the rotation process;
If there is a collision with the obstacle, planning the arc path based on the location information of the target point and the control basic information, to obtain an arc path and a transition point on the arc path;
Controlling the robot to move towards the transition point according to the arc path and move towards the target point from the transition point.

Of course, for the storage medium comprising computer-executable instructions provided in the present embodiment, the computer-executable instructions are not limited to the above method operations, but can also perform relevant operations in the robot control method provided in any embodiment of the present application.

Through the above description of the implementation method, those skilled in the art can clearly understand that the present application can be implemented with the help of software and necessary general hardware, and of course, it can also be implemented through hardware. However, in many cases, the former is a better implementation method. Based on this understanding, the technical solution of this application, which essentially or in other words, contributes to the existing technology, can be reflected in the form of software products. The computer software product can be stored in a computer-readable storage medium, such as a computer's floppy disk, Read Only Memory (ROM), Random Access Memory (RAM), Flash memory (FLASH), hard disk or optical disc, etc., including several instructions to enable a computer device (which can be a personal computer, server, or network device, etc.) to execute the methods of various embodiments of this application.

It is worth noting that in the above embodiment of the device, the various units and modules included are only divided according to the functional logic, but are not limited to the above division, as long as the corresponding functions can be implemented; In addition, the specific names of each functional unit are only for the purpose of distinguishing them from each other and are not used to limit the scope of protection of this application.

Note that the above are only the preferred embodiments and technical principles used in this application. Those skilled in the art will understand that this application is not limited to specific embodiments here, and can undergo various obvious changes, readjustments, and replacements for those skilled in the art without departing from the scope of protection of this application. Therefore, although the above embodiments have provided a more detailed explanation of the present application, the present application is not limited to the above embodiments. Without departing from the concept of the present application, it may also include more equivalent embodiments, and the scope of the present application is determined by the scope of the attached claims.

## Claims

1. A robot control method, comprises:
Obtaining information of an obstacle, location information of a target point, and control basic information of the robot;
simulating rotation based on the information of the obstacle and a rotation dimension of the robot, judging whether the robot will collide with an obstacle during the rotation process;
if there is a collision with an obstacle, planning an arc path based on the location information of the target point and the control basic information, to obtain a target path and a transition point on the target path;
controlling the robot to move to the transition point according to the target path, and move from the transition point to the direction of the target point.

2. The method of Claim 1, wherein the method further comprises:
If the robot does not collide with obstacles during the rotation process, rotating the robot to the target direction corresponding to the location information of the target point;
controlling the robot to move in the target direction to the target point.

3. The method of Claim 1, wherein planning the arc path based on the location information of the target point and the control basic information to obtain the target path and the transition point on the target path comprises:
planning a forward arc path based on the location information of the target point and the control basic information, for each planned forward arc path, judging whether the forward arc path meets the preset requirements;
if satisfied, determining the currently planned forward arc path as the target path, and determine the point on the target path that meet the preset requirements as the transition point, if not satisfied, planning a next forward arc path;
if all the planned forward arc paths do not meet the preset requirements, judging whether the historical path to the current location point meets the preset requirements based on the control basic information;
if satisfied, determining the historical path as the target path, and determining the points meeting the preset requirements as the transition points.

4. The method of Claim 3, wherein the control basic information comprises a velocity range, a minimum turning radius;
wherein planning the forward arc path based on the location information of the target point and the control basic information, for each planned forward arc path, judging whether the forward arc path meets the preset requirements comprises:
extracting a first preset quantity of velocity values from the velocity range, and determining angular velocity corresponding to each velocity value based on the minimum turning radius;
combining the obtained velocity values and the angular velocity in pairs, for any combination, determining an arc radius of the forward arc path corresponding to the combination, if the arc radius meets the requirements of the preset radius, determining the arc radius as the arc radius to be taken;
for any of the arc radius to be taken, if there are other arc radius to be taken with the same value, determining the combination corresponding to any arc radius to be taken of the arc radius to be taken with the same value as the target combination; if there are no other arc radius to be taken with the same value, determine the combination corresponding to the arc radius to be taken as the target combination;
for any target combination, fitting the forward arc path based on the velocity and angular velocity values in the target combination;
extracting a second preset quantity of simulation points from the forward arc path, and sequentially simulating rotation on the simulation point;
wherein if the robot will not collide with obstacles during simulating rotation performed at a simulation point, the forward arc path meets the preset requirements, and the simulation point currently undergoing simulating rotation meets the preset requirements;
if the robot will collide with obstacles during simulating rotation performed at all simulation points, the forward arc path is determined not to meet the preset requirements.

5. The method of Claim 4, wherein the control basic information further comprises a preset minimum arc distance;
Wherein before extracting the second preset quantity of the simulation points from the forward arc path, planning the forward arc path based on the location information of the target point and the control basic information, for each planned forward arc path, judging whether the forward arc path meets the preset requirements further comprises:
if the distance of the forward arc path is less than the preset minimum arc distance, filtering the forward arc path and planning the next forward arc path.

6. The method of Claim 4 or 5, wherein the control basic information further comprises a preset farthest arc distance; wherein extracting the second preset quantity of the simulation points from the forward arc path comprises:
extracting the second preset quantity of simulation points from the forward arc path if the distance of the forward arc path is greater than the preset farthest arc distance, wherein the distance from each simulation point to the starting point is less than or equal to the preset farthest arc distance;
if the distance of the forward arc path is less than or equal to the preset farthest arc distance,
extracting the second preset quantity of the simulation points from the forward arc path.

7. The method of Claim 5, wherein the control basic information further comprises a preset farthest arc distance; wherein extracting the second preset quantity of the simulation points from the forward arc path comprises:
extracting the second preset quantity of the simulation points from the forward arc path if the distance of the forward arc path is greater than the preset farthest arc distance, wherein the distance from each simulation point to the starting point is less than or equal to the preset farthest arc distance, and the distance from each simulation point to the starting point is greater than or equal to the preset minimum arc distance;
if the distance of the forward arc path is less than or equal to the preset farthest arc distance, extracting the second preset quantity of the simulation points from the forward arc path, wherein the distance from each simulation point to the starting point is greater than or equal to the preset minimum arc distance.

8. The method of Claim 1, wherein the control basic information comprises a rotation angle range, obtaining the control basic information of the robot comprises: determining the rotation angle range of the robot without colliding with obstacles based on the information of the obstacle.

9. A robot control apparatus, comprises:
an obtaining module, used to obtain information of an obstacle, location information of a target point, and control basic information of the robot;
a collision prediction module, used to simulate rotation based on the information of the obstacle and a robot rotation dimension, and judge whether the robot will collide with obstacles during the rotation process;
an arc planning module, used to plan an arc path based on the location information of the target point and control basic information in case of collision with obstacles, to obtain the arc path and transition points on the arc path;
a travel control module, used to control the robot to move towards a transition point according to the arc path and move towards the target point direction from the transition point.

10. An electronic device, comprises:
one or more processor;
a storage device for storing one or more programs;
when the one or more programs are executed by the one or more processor, the one or more processor implement the robot control method according to any one of claims 1-8.

11. A computer-readable storage medium, on which a computer program is stored, and when the program is executed by the processor, the robot control method according to any one of claims 1-8 is implemented.
